(19) Europäisches Patentamt / European Patent Office / Office européen des brevets

(11) **EP 2 569 069 B1**

(12) **EUROPEAN PATENT SPECIFICATION**

| | |
|---|---|
| (45) Date of publication and mention of the grant of the patent: **10.04.2019 Bulletin 2019/15** | (51) Int Cl.: **G01N 1/22** *(2006.01)* **G01N 15/04** *(2006.01)* **B07B 7/01** *(2006.01)* **B01D 45/02** *(2006.01)* **G01N 15/02** *(2006.01)* |
| (21) Application number: **11781084.6** | |
| (22) Date of filing: **09.05.2011** | (86) International application number: **PCT/US2011/035773** |
| | (87) International publication number: **WO 2011/143122 (17.11.2011 Gazette 2011/46)** |

(54) **PARTICULATE MATTER MONITOR**

PARTIKELMATERIALMONITOR

SYSTÈME DE SURVEILLANCE DE PARTICULES

<div>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2010 US 333000 P**

(43) Date of publication of application:
**20.03.2013 Bulletin 2013/12**

(73) Proprietor: **Thermo Fisher Scientific Inc. Waltham, MA 02451 (US)**

(72) Inventors:
• **GOOHS, Kevin, J.**
  **Greenfield**
  **New Hampshire 03047 (US)**
• **SOCHA, Jeffrey**
  **Boylston**
  **Massachusetts 01505 (US)**

(74) Representative: **Boult Wade Tennant LLP Verulam Gardens 70 Gray's Inn Road London WC1X 8BT (GB)**

(56) References cited:
WO-A2-2007/044496    GB-A- 2 104 414
US-A- 2 708 516      US-A- 4 188 535
US-A- 4 587 024      US-A1- 2003 160 174
US-A1- 2004 259 267  US-A1- 2009 065 403
US-B1- 6 283 301     US-B1- 6 883 667

• SHAPIRO M ET AL: "Air classification of solid particles: a review", CHEMICAL ENGINEERING AND PROCESSING, ELSEVIER SEQUOIA, LAUSANNE, CH, vol. 44, no. 2, 1 February 2005 (2005-02-01), pages 279-285, XP027608170, ISSN: 0255-2701

</div>

## Description

BACKGROUND

Continuous monitoring of the mass concentration of particulate matter from source emissions is becoming a growing requirement within the framework of clean air regulations in both the US and abroad. Of great interest is the desire to measure a particulate mass concentration in a form that simulates the source emission after it has equilibrated to ambient air conditions. This form of particulate matter is known as Total Primary Particulate (TPP) and is comprised of particulate matter that can be removed directly from a source through the use of filterable extraction plus particulate that can be created by condensation at a reference temperature from the remaining fluid stream.

The extraction, transport, conditioning and measurement of a sample from a source are critical processes necessary to provide consistent results and low downtime for service. Each of these processes gives rise to specific challenges, and with proper design, can be overcome and reduce instrumentation service intervals.

Through the past few decades the Unites States Environmental Protection Agency (EPA) has promulgated at least 15 reference methods for measuring particulate matter from source emissions. The root cause of this plethora of methodology stems from the varying conditions in which the EPA justified modifying the originating method (e.g., Method 5). As a result of these varied methods, instrumentation manufacturers have taken advantage of their ability to install and calibrate (correlate) a surrogate particulate matter measurement (e.g., light scattering, opacity, probe electrification) to one of the multitude of reference methods, which can vary in accuracy by an order of magnitude.

The concept of measuring TPP is not new to the art. A synonym for this methodology is known as dilution tunnel sampling whereby a sample is extracted from a source and diluted with filtered ambient air so that conventional ambient air samplers or analyzers can be used to measure the diluted concentration. By simultaneous measurement of the magnitude of dilution (dilution ratio), the measured concentration would be multiplied by the dilution ratio to calculate the actual concentration within the source. In the last 20 years prior art has documented this approach:

> i) SAMPLING, ANALYSIS, AND PROPERTIES OF PRIMARY PM-2.5: APPLICATION TO COAL-FIRED UTILITY BOILERS. DOE AWARD #: DE-FG2699-FT40583, FEBRUARY 2003; DILUTION TEST METHOD FOR DETERMINING PM2.5 AND PM10 MASS IN STACK GASES. ASTM WK8124 ~ 2008;
> ii) SOURCE CONTRIBUTIONS TO ATMOSPHERIC CARBON PARTICLE CONCENTRATIONS. G.R. CASS, CALIFORNIA INSTITUTE OF TECHNOLOGY, 1992; and
> iii) CONDITIONAL TEST METHOD 039, MEASUREMENT OF PM2.5 AND PM10 EMISSIONS BY DILUTION SAMPLING, USEPA, JULY 2004.

Particulate monitoring can be a complex process. Although reference methods are capable of operating within complex source emission environments, the operating period can be somewhat short-lived. Frequent cleaning of equipment and recovery of sample may be necessary.

These types of steps for a continuous monitor are unacceptable and therefore innovative approaches are required to extract, handle and condition a sample for the purpose of measurement. For example, the USEPA often requires the use of in-stack cyclones, which will separate, through inertia, the particles of interest for measurement and collect and remove larger particles that are not of interest. Such cyclones can only collect and remove unwanted particulate for a finite period of time. However, use of this approach is unacceptable from a service perspective for a continuous monitoring system whether it is for an in-stack cyclone or a post-diluted sample cyclone.

Another complexity for of particulate matter monitoring systems is that of the source environment. Although highly corrosive environments are expected, the larger challenge is to design a system such that it may be utilized in a water- saturated environment as well as very hot, dry environments. In a saturated environment, both particulate matter and water droplets less than approximately 40 micrometers need to be collected based on the theory that a droplet will have a 4: 1 reduction in size and, when dried, will become a 10 micrometer particle - which may be of interest.

US-B-6,283,301 discloses a particulate monitoring system in which a sample fluid, containing particulate matter, flows vertically along a column. The sample fluid is fed to the column through a feed port, the column extending vertically from the feed port to a top of the column. A current of fluid is drawn through the column, so that a light fraction of the particulate matter is removed at the top of the column and a heavy fraction of the particulate matter falls to the bottom of the column.

Shapiro et al, "Air classification of solid particles: a review"; Chemical Engineering & Processing, Elsivier Sequoia, Lausanne, CH, Vol 44. No. 2, 1/2/2005, pp. 279-285; US-B-6,883,667; and GB-A-2,104,414 each show particulate monitoring systems with vertical columns, wherein gravity is employed to separate lighter and heavier particles.

WO 2007/044496 A2 discloses an apparatus for emissions monitoring. The apparatus comprises an ambient dispersion simulator for aging the sample.

SUMMARY OF THE INVENTION

The present invention is defined, in a first aspect, by the method of claim 1, and in a second aspect, by a particulate monitor system in accordance with claim 6.

Embodiments herein deviate with respect to conventional particulate mass monitors and aging systems. For example, one embodiment herein includes a particulate monitoring system that relies at least in part on gravitational forces to separate different sizes of particulate matter in a vertically disposed conduit.

More specifically, in accordance with one embodiment, a particulate monitoring system receives a fluid sample inputted to a conduit through an input port. The fluid sample includes different sizes of particulate matter. During operation, the particulate monitoring system controls a flow of the fluid sample (such as a mixture of a flue gas sample and a dilution gas or other sample of interest) through the conduit to age the particulate matter in the fluid sample. Gravitational forces cause a portion of the particulate matter in the fluid sample to fall into a basin as opposed to being exhausted through an output port of the condition. The particulate monitoring system outputs a portion of the particulate matter (e.g., particulate matter that does not drop out due to gravity) from an output port of the conduit. The output port is disposed at a vertically higher level of the conduit than the input port. The particulate monitoring system monitors a presence of particulate matter outputted from the output port of the conduit.

As mentioned, one embodiment of the particulate monitoring system relies at least in part on gravitational forces to separate, in the conduit, heavier particles from lighter particles in the fluid sample. For example, the particulate matter ages as it passes though the conduit. Aging causes certain types of particulate matter in the fluid sample to become heavier and fall into the basin due to the gravitational forces. Aging causes certain particulate matter to become lighter and therefore pass through the output port for monitoring.

In accordance with another embodiment, the directional flow of the fluid sample passing from the input port to the output port of the conduit is substantially opposite to gravitational forces. In other words, the flow of gas or liquid in the fluid sample applies a force on the particulate matter in the fluid sample to pass from the input port to the output port. However, gravitational forces pull the particulate matter in the fluid sample in a substantially opposite direction of the gas or liquid flow of the fluid sample. If the gravitational forces are greater than the force on the particulate matter due to flow of the fluid in the fluid sample, the particulate matter does not exit the output port of the conduit. If the forces applied to the particulate matter by the flow of the fluid in the fluid sample are greater than the gravitational forces, the particulate matter exits the output port of the conduit.

The particulate monitoring system includes a flow controller to control a flow rate of the fluid sample from the input port to the output port through the conduit to separate the heavier particles and the lighter particles from each other. This process includes outputting the lighter particles from the output port and settling the heavier particles in a basin disposed at a vertically lower level than a level of the input port of the conduit.

In one embodiment, the particulate monitoring system and any of one or more controllers therein controls a rate of the fluid sample through the conduit such that the residence time of at least a portion of the particulate matter in the conduit is above a threshold value.

The particulate monitoring system also can control a rate of the fluid sample through the conduit to control which portion of the different sizes of particulate matter in the fluid sample overcome the gravitational forces and pass through the output port of the conduit. In addition to a flow of the fluid sample, the particulate monitoring system is configured to control other environmental parameters. For example, the particulate monitoring system can be configured to control a temperature of the fluid sample in the conduit; the particulate monitoring system can be configured to control a relative humidity of the fluid sample in the conduit; etc.

Via control of environmental parameters of the fluid sample in the conduit, the particulate monitoring system is able to simulate aging of the particulate matter that would occur when the fluid sample is otherwise exhausted into the atmosphere. As discussed above, via controlling the environmental parameters in the particulate monitor system, a portion of particles in the fluid sample received from the input port physically becomes heavier and falls into a basin due to gravitational forces as opposed to being otherwise outputted from the output port with lighter particles that are not heavy enough to settle in the basin due to the gravitational forces. In other words, aging the received particulate matter can change an aerodynamic equivalent diameter of the particle to a larger value during residence in the conduit, which cause the particle to fall into a basin as opposed to being exhausted out of the conduit. Conversely, aging of a received particulate matter can change an aerodynamic equivalent diameter of the particle to a smaller value during residence in the conduit, which cause the particle to be exhausted out of the conduit pass through output port as opposed to settling in a basin. Particulate matter as discussed herein can be a single particle or multiple particles.

In one embodiment, the output port or other portion of the conduit is tapered to focus the fluid sample for particulate matter monitoring. Tapering the conduit and/or output port increases a density of the fluid sample for analysis by a mass monitoring system.

Monitoring and analyzing the presence of particulate matter outputted from the output port of the conduit can include measuring a particle size distribution of the particulate matter outputted from the output port through the tapered conduit.

In accordance with yet another embodiment, the fluid sample passed through the conduit can be a mixture of a dilution gas and a received flue sample. The particulate monitoring system can monitor a sensor (e.g., a relative humidity sensor or dew point sensor to monitor water in the fluid sample) in the conduit. The particulate monitoring system controls or adjusts a dilution ratio of the dilution gas mixed with the received flue gas sample to maintain the relative humidity of the fluid sample in the conduit to be within a desired range or level.

A mass monitoring system monitors a presence of particulate matter in the diluted flue gas sample passing through and outputted from the conduit. In one embodiment, the particulate monitoring system sets a rate of inputting the fluid sample into the conduit to be substantially constant and adjusts the relative humidity of the dilution gas to keep the relative humidity of the fluid sample within a desired range.

Extraction Nozzle Embodiments

Embodiments herein include a particulate matter extraction system. The particulate matter extraction system includes a first conduit such as a nozzle. A fluid sample including particulate matter of one or more different sizes passes through the first conduit. The particulate matter extraction system applies a stream of fluid or curtain in a substantially orthogonal direction with respect to a directional flow of the fluid sample through the first conduit to push a portion of the particulate matter in the fluid sample into a second conduit. For example, the particulate matter extraction system can apply, in an orthogonal manner, the stream of fluid at an axial end of the first conduit that receives the fluid sample. The particulate matter extraction system monitors a presence of particulate matter passing through the second conduit.

In accordance with further embodiments, the particulate matter extraction system can be configured to apply the stream of fluid causes relatively lighter particles in the particulate matter to be pushed into the second conduit while relatively heavier particles in the particulate matter pass through the first conduit.

To reduce unwanted buildup of particulate matter on the nozzle, the particulate matter extraction system can be configured to apply a purge fluid through a fluid permeable outer wall structure of the first conduit (e.g., nozzle).

In accordance with yet further embodiments, the second conduit or probe of the particulate matter extraction system can be disposed substantially orthogonal to the first conduit; an end of the second conduit can be configured to couple to the first conduit; a wall of the first conduit can be configured to have an opening into the second conduit for receiving the orthogonally pushed particulate matter in the fluid sample. Applying the stream of fluid causes relatively lighter particles in the particulate matter of the fluid sample received by the first conduit to be pushed through the side opening in the nozzle into the second conduit while relatively heavier particles in the particulate matter pass through an output end of the first conduit. A wall thickness of the first conduit can be tapered at an axial end that receives the fluid sample. The wall thickness of the nozzle can be flared or thicker at an axial end that outputs the fluid sample.

These and other more specific embodiments are disclosed in more detail below.

It is to be understood that embodiments of the system, method, apparatus, etc., as discussed herein can be embodied strictly as hardware, as a hybrid of software and hardware, or as software alone such as within a processor, or within an operating system or a within a software application.

As discussed above, techniques herein are well suited for use in particulate monitoring systems. However, it should be noted that embodiments herein are not limited to use in such applications and that the techniques discussed herein are well suited for other applications as well.

Additionally, note that although each of the different features, techniques, configurations, etc., herein may be discussed in different places of this disclosure, it is intended, where appropriate, that each of the concepts can optionally be executed independently of each other or in combination with each other. Accordingly, the one or more present inventions as described herein can be embodied and viewed in many different ways.

Also, note that this preliminary discussion of embodiments herein purposefully does not specify every embodiment and/or incrementally novel aspect of the present disclosure or claimed invention(s). Instead, this brief description only presents general embodiments and corresponding points of novelty over conventional techniques. For additional details and/or possible perspectives (permutations) of the invention(s), the reader is directed to the Detailed Description section and corresponding figures of the present disclosure as further discussed below.

BRIEF DESCRIPTION OF THE DRAWINGS

The foregoing and other objects, features, and advantages of the invention will be apparent from the following more particular description of preferred embodiments herein, as illustrated in the accompanying drawings in which like reference characters refer to the same parts throughout the different views. The drawings are not necessarily to scale, with emphasis instead being placed upon illustrating the embodiments, principles, concepts, etc.

FIG. 1 is an example diagram of a system for aging particulate matter in a fluid sample according to embodiments herein.
FIG. 2 is an example diagram of a system for aging particulate matter in a fluid sample according to embodiments herein.
FIG. 3 is a theoretical example graph illustrating settling velocity versus aerodynamic equivalent diameter of particulate matter according to embodiments herein.

FIG. 4 is an example diagram of a particulate monitor system including components to control a relative humidity or dew point of a fluid sample according to embodiments herein. FIG. 5 is a flowchart illustrating an example particulate monitoring method according to embodiments herein.

FIG. 6 is a flowchart illustrating an example of particulate matter separation according to embodiments herein.

FIG. 7 is an example diagram illustrating a computer for executing software instructions to carry out operations according to embodiments herein.

FIG. 8 is an example diagram illustrating a conventional nozzle according to embodiments herein.

FIG. 9 is an example diagram illustrating a particulate matter extraction system according to embodiments herein.

FIG. 10 is an example diagram illustrating a top view of a particulate matter extraction system according to embodiments herein.

FIG. 11 is an example diagram illustrating a top view of a particulate matter extraction system according to embodiments herein.

FIG. 12 is an example diagram illustrating of a cutaway view of a nozzle according to embodiments herein.

FIG. 13 is an example diagram illustrating a top view of a particulate matter extraction system according to embodiments herein.

FIG. 14 is an example diagram illustrating a vertical cutaway of a nozzle according to embodiments herein.

DETAILED DESCRIPTION

An example particulate monitoring system includes a conduit in which to a pass a fluid sample. The particulate monitoring system receives a fluid sample inputted to the conduit through an input port. The fluid sample can include different sizes of particulate matter. The particulate monitoring system controls a flow of the fluid sample through the conduit to age the particulate matter. Characteristics of the particulate matter can change while resident within the conduit. In opposition to a flow of the fluid in the fluid sample towards the output port, gravitational forces cause a portion of the particulate matter in the fluid sample to fall into a basin as opposed to being exhausted through the output port. The output port is disposed at a vertically higher level of the conduit than the input port. The particulate monitoring system outputs, from the output port, a portion of the original particulate matter in the fluid sample (e.g., particulate matter that does not drop into the basin out due to gravity) for analysis.

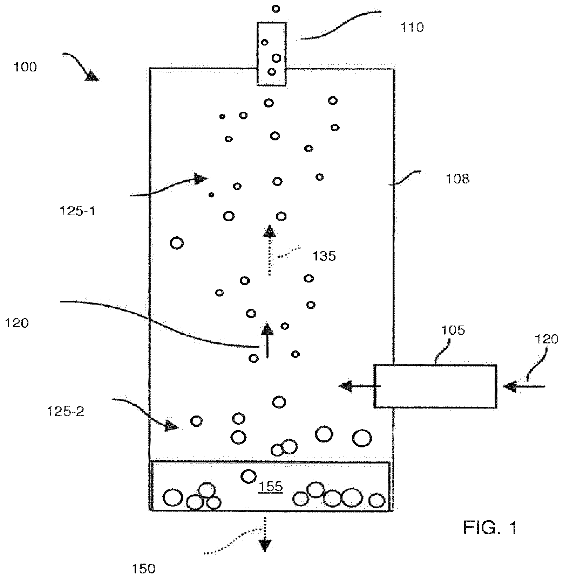

Now, more particularly, FIG. 1 is an example diagram illustrating a particulate monitor system 100 according to embodiments herein. As shown, particulate monitor system 100 includes an input port 105, a conduit 108, and an output port 110.

In this general embodiment, the particulate monitor system 100 receives fluid sample 120. The fluid sample 120 is inputted through input port 105 and passes through conduit 108 to output port 110. The conduit 108 acts as an aging vessel for the particulate matter 125 as it passes or resides in conduit 108.

Note that the fluid sample 120 can include a liquid and or gas as well as different sizes of particulate matter of any suitable type. For example, in one embodiment, the fluid sample 120 can be received as a mixture of: i) a flue gas sample (e.g., as received from a smoke stack) and ii) a dilution gas. The flue gas sample can include particulate matter for analyzing.

In one embodiment, the particulate monitor system 100 controls a rate of the flow of the received fluid sample 120 into the input port 105. In one embodiment, the flow rate of the fluid sample 120 is controlled within a desired range in order to ensure that the particulate matter 125 in the fluid sample 120 resides in the conduit 108 for at least a minimum threshold time.

In accordance with another embodiment, the flow rate of the fluid sample 120 is controlled in order to select which sizes of particulate matter in the fluid sample 120 passes through the conduit 108 through the output port 110.

For example, as indicated by directional flow 135, gases and/or liquid in the fluid sample 120 flow in a substantially vertical manner through conduit 108 to output port 110. The gas and/or liquid in the fluid sample 120 imparts an upward force on the particulate matter to push it through the conduit 108 and out of the output port 110 for analysis.

The output port 110 is disposed at a vertically higher level of the conduit 108 than the input port 105. As will be discussed in more detail below, output port 110 can include a mass monitoring system to determine a mass concentration associated with the particulate matter in fluid sample. In one embodiment, the system as discussed herein can include or be used in a manner to detect a size distribution of one or more particles in the particulate matter. For example, the monitoring system can measure different sizes of particulate matter above a threshold value passing through the conduit 108 and output port 110. Particulate matter as discussed herein can be a single particle or multiple particles.

As mentioned, the directional flow 135 of gas and/or liquid present in the fluid sample 120 imparts an upward force on the particulate matter 125 in the fluid sample 120. In a substantially opposite direction, gravitational forces 150 exert a downward force on the particulate matter 125 towards basin 155. If the gravitational forces 150 on particulate matter are greater than the force exerted due to flow of the fluid sample 120, the particulate matter does not exit the output port of the conduit but instead falls into basin 155. If the forces applied to the particulate matter due to the flow of the fluid sample 120 are greater than the gravitational forces 150, the particulate matter exits the output port 110 of the conduit 108.

In one embodiment, the particulate matter 125 passes though the conduit 108 and out of output port 110 or falls into the basin 155 depending on the effective aerodynamic equivalent size of the particulate matter. For example, a majority of the lighter particulate matter or particulate matter 125-1, which has an aerodynamic equivalent diameter below a threshold value, passes through conduit 108 and out of output port 110. A majority of the heavier particulate matter or particulate matter 125-2, which has an aerodynamic equivalent diameter above the threshold value, does not pass through conduit 108 and out of output port 110. Accordingly, the particulate monitor system 100 uses gravitational forces 150 and gas flow forces of the fluid sample 120 to separate heavier particulate matter 125-2 from lighter particulate matter 125-1.

The gravitational forces 150 applied to the particulate matter 125 are relatively constant. The particulate monitoring system 100 can control a rate (e.g., volume) of the fluid sample 120 passing through the conduit 108 to control which portion of the different sizes of particulate matter overcome the gravitational forces and pass through the output port of the conduit.

For example, higher flow rates of passing the fluid sample 120 through conduit 108 causes more of the particles in the fluid sample 120 to exit conduit 108 through the output port 110. Lower flow rates of passing the fluid sample 120 through conduit 108 causes more of the particles in the fluid sample 120 to fall into basin 155 as opposed to being outputted from output port 110.

Note again that the particulate matter 125 in the fluid sample 120 ages as it passes though the conduit. The process of aging causes certain types of particulate matter in the fluid sample to become heavier during its residence within conduit 108, causing it to fall into the basin 155 due to the gravitational forces 150.

Aging of particulate matter in the fluid sample 120 also can cause certain particulate matter 125 to become lighter during residence in conduit 108, causing it pass through the output port 110 for mass monitoring. Environmental parameters of the fluid sample 120 in the conduit 108 are controlled to cause different types of aging to respective particulate matter 125 in the fluid sample 120.

Environmental parameters controlled by the particulate monitor system 100 include the temperature of the fluid sample in the conduit or the relative humidity of the fluid sample 120. The environmental parameters can further include velocity of the fluid sample 120 through the conduit 108; etc. Via control of environmental parameters of the fluid sample 120 in the conduit 108, the particulate monitoring system 100 is able to simulate aging of the particulate matter 125 that otherwise occurs when exhausted into the atmosphere.

In one embodiment, the particulate monitor system 100 controls the pressure in the conduit 108 to be in a range such as 101kPa +/- 51 kPa (1.0 +/- .5 atmospheres), although the pressure of the fluid sample 120 in conduit 108 can be any suitable value.

In accordance with another embodiment, the particulate monitor system 100 controls the temperature in the conduit 108 to be approximately 30 degrees during TPP type simulations.

In accordance with other embodiments, the particulate monitor system 100 controls the temperature of the fluid sample in the conduit 108 to be any suitable temperature such as between 25 and 180 degrees Celsius.

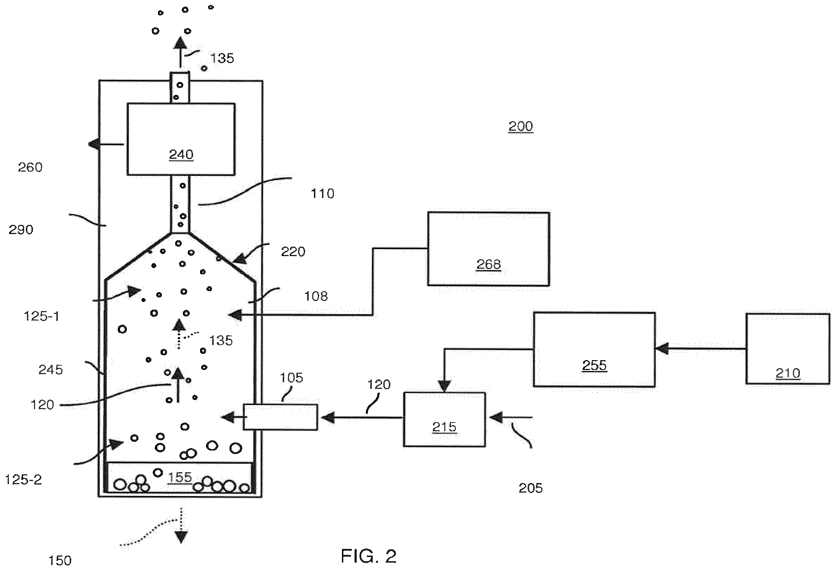

FIG. 2 is an example diagram of a system 200 for aging particulate matter in a received gas sample according to embodiments herein.

By way of a non-limiting example, note that components such as conduit 108, output port 110, mass monitor 240, etc., or portions thereof can reside within an insulated enclosure 290.

As shown, particulate monitor system 200 receives gas sample 205 from a source such as a flue via probe 215. Probe 205 can be heated. In one embodiment, the probe 205 resides within a respective flue (e.g., smokestack or other exhaust system outputting particulate matter of interest).

The particulate monitor system 200 can include dilution gas source 210 for providing particle-free dry air, nitrogen, etc., to dilute the gas sample 205.

Particulate monitor system 200 includes flow controller 255 (e.g., one or more control valves, conduits, etc.) to control a flow of the gas sample 205 and/or control dilution of the gas sample 205 with dilution gas received from dilution gas source 210. Fluid sample 120 is a mixture or combination of gas sample 205 mixed with dilution gas received from dilution gas source 210.

Particulate monitor system 200 can include temperature controller 268. Temperature controller 268 can be configured to monitor a temperature of the fluid sample 120 in conduit 108 and regulate the temperature of the fluid sample 120 in the conduit 108 within a desired range.

By way of a non-limiting example, the particulate monitor system 200 can include flow controller 255 to dilute the gas sample 205 based on a ratio of between 10:1 (e.g., ten parts dilution gas to one part gas sample 205) and 25:1 (e.g., twenty five parts dilution gas to one part gas sample 205). Thus, one part of the gas sample 205 can be diluted with between ten and twenty-five parts of dilution gas. In accordance with other embodiments, note that the gas sample 205 can be diluted using any suitable ratio for particulate mass monitoring as discussed herein.

In accordance with further embodiments, the dilution gas received from the dilution gas source 210 can have a dew point between -40 and -70 degree Celsius. However, note that the dew point of the dilution gas can be any appropriate value for a respective application of particulate monitor system 200.

As previously discussed, the fluid sample 120 passes through conduit 108. The particulate matter 125 ages while passing through conduit 108. A first portion of the particulate matter 125-1 in fluid sample 120 passes through output port 110 while a second portion of particulate matter 125-2 falls into basin 155.

Depending on the embodiment, conduit 108 can be made of any suitable material such as stainless steel, plastic, etc. The inner walls of conduit 108 (to which the fluid sample is exposed) can include a coating 245 of material such as glass, epoxy, etc. Certain types of coatings can prevent particulate matter from sticking as it passes through conduit 108.

In one embodiment, the output port 110 and/or respective portion of conduit 108 includes taper 220 to focus the fluid sample 120 for particulate monitoring via mass monitor 240.

The mass monitor 240 monitors the presence of particulate matter outputted from the output port 110 of the conduit 108. Mass monitor 240 can employ any suitable technique to monitor the fluid sample 120 for presence of particulate matter. For example, the mass monitor 240 can be configured to pass an optical signal though the passing fluid sample 120 and analyze scattered, reflected, absorption, etc., to determine respective distribution densities of one or more classes of different sized particles. Any suitable technique can be used to analyze the particulate matter.

Analysis of the passing fluid sample 120 by mass monitor 240 can include measuring a particle size distribution of the particulate matter in the fluid sample 120 and generating respective particle distribution information 260. The probability distribution information 260 can indicate the density of a group of particulate matter falling within a first size range; the probability distribution information 260 can indicate the density of a group of particulate matter falling within a second range; and so on.

In accordance with yet another embodiment, as mentioned, the fluid sample 120 in the conduit 108 can be a mixture of a dilution gas and a received flue gas sample 205 including particulate matter. The particulate monitoring system 200 can be configured to monitor a relative humidity of the fluid sample in the conduit 108. In accordance with such an embodiment, the particulate monitor system 200 controls a relative humidity of the dilution gas (as received from the dilution gas source 210) mixed with the received gas sample 205 to maintain the relative humidity of the fluid sample 120 in the conduit 108 to be within a desired range.

In one embodiment, the particulate monitor system 200 sets a rate of inputting the fluid sample 120 into the conduit 108 to be substantially constant.

One use of the particulate monitor systems as discussed herein is to simulate plume conditions after a flue gas has left a smoke stack and has been exposed to the atmosphere. Particle formation after leaving the stack can include a number of processes such as condensation growth, droplet evaporation, coagulation, agglomeration, enrichment, and saturation vapor pressure. These processes are part of the "aging" process of particulate matter. Controlling the environmental parameters and flow of the fluid sample in conduit 108 simulates the aging of particulate matter that would otherwise occur in the open atmosphere. Thus, it is possible to analyze aged particulate matter even though it has not been exhausted into the open air above a smokestack.

In one embodiment, in an effort to maintain consistency with which the aging occurs, a reference condition can be chosen - analogous to the laboratory reference conditions to which ambient PM2.5 samples are measured. A temperature and relative humidity of the fluid sample in the conduit 108 can be selected to be a constant value since variations in these parameters can affect aging.

As mentioned, via particulate monitor system 200, after particles have been extracted from an emission source (e.g., a flue) they encounter a region of dilution within the probe for the purpose of drying the particles to a reference condition further downstream. The fluid sample 120 (including respective particles) are delivered to the conduit 108. In one embodiment, the conduit 108 is vessel known as a vertical elutriator.

As mentioned, the conduit 108 gravitationally separates and removes particles of non-interest above a given aerodynamic equivalent size (or size range). The vertical conduit 108 enables remaining particles of interest (e.g., particulate matter that do not fall into basin 155 out due to gravity) to pass though output port 110 for mass measurement.

As mentioned, parameters such as temperature, relative humidity, and vertical fluid velocity conditions of the fluid sample 120 within the conduit 108 can be held near constant conditions (e.g., 30 deg C, 70% RH, and 0.00299 m/s) whilst the fluid sample 120 (e.g., a diluted gas sample) is aged in the conduit 108 for a desired residence time.

As discussed, embodiments herein permit a variable separation of particles by varying the vertical velocity of the fluid sample 120 towards a mass monitor 240. For example, the particulate monitor system 200 can set the flow rate to a first velocity setting in which a majority of particles above a first threshold value pass through output port 110 and are analyzed by mass monitor 240 to produce a first set of probability distribution information 260; the particulate monitor system 200 can set the flow rate to a second velocity setting in which a majority of particles above a second threshold value pass through output port 110 and are analyzed by mass monitor 240 to produce a second set of probability distribution information 260; and so on.

In one embodiment, the conduit 108 enables the particulate matter in gas sample 205 and the dilution gas to mix and/or react for a time period in excess of 10 seconds. In accordance with another embodiment, the flow rate of the fluid sample 120 can be controlled such that the residence time permits particulate matter aging in the fluid sample of approximately 1 or more minutes.

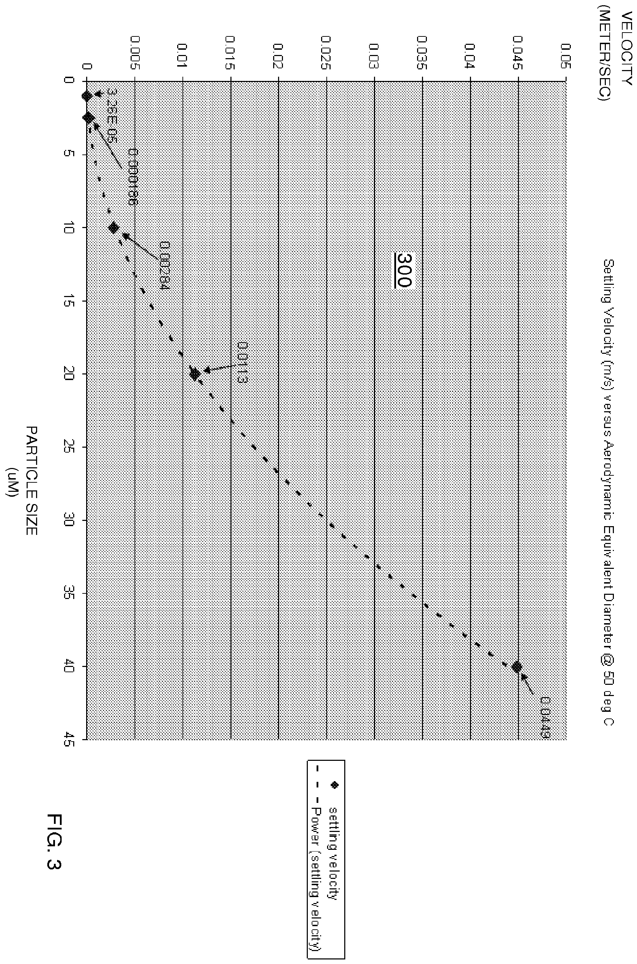

FIG. 3 is an example hypothetical graph illustrating aerodynamic equivalent diameter of particulate matter versus settling time at temperature 50 degrees Celsius and pressure of approximately one atmosphere according to embodiments herein. Conditions

In general, graph 300 illustrates that particulate matter having a higher aerodynamic equivalent diameter has a higher settling velocity than do smaller aerodynamic equivalent diameter particles. Note that graph 300 takes into account power regression. To push the larger sized particulate matter in fluid sample 120 through the output port, an appropriate higher velocity of the gas and/or liquid in the fluid sample 120 is needed.

Graph 300 can be used to determine the rate at which to pass the fluid sample 120 through the conduit 120. For example, a user first determines a size of particles of interest to be analyzed in the fluid sample 120. The user then sets a rate of the fluid sample 120 to be above the corresponding settling velocity for the particulate matter of interest in order to push the particulate matter out through the output port 110. Note that different sized particles in the fluid sample 120 will have a different resident time in the conduit 108.

Example Embodiment

Note that each of the different parameters of this example embodiment are shown by way of non-limiting example only and that such parameters can be set to any suitable value depending on the embodiment.

In one non-limiting example embodiment of a particulate monitor system, the fluid sample 120 (e.g., diluted sample) is drawn or pushed into the input port 105 of the conduit 108 at a flow rate of approximately 1.88 liter per minute (0.000031 cubic meters per second).

The conduit 108 (e.g., particulate matter separation chamber) of the particulate monitor system can be configured to have an inside diameter of approximately 0.118 meters and a height of at least 0.03 meters for a minimum residence time of 10 seconds.

The cross sectional area of the conduit 108 (viewed from a direction of the flow 135), can be calculated from the inside diameter. For example, in this example embodiment, the cross-sectional are is 0.011 square meters. The sample flow rate is divided by the cross sectional area to calculate and upward velocity of the fluid sample 120. In this example, the upward velocity of the fluid sample 120 is equal to 0.00284 meters per second.

In this case the velocity is substantially equal to the settling velocity of particles with an aerodynamic equivalent diameter (AED) of 10 micrometers (see graphs 300 and 400). Thus, a majority of particles with an AED larger than 10 micrometers settle out and are not carried on to be measured, but a majority of particles smaller than an AED of 10 micrometers are transported to be measured. This relationship of AED and settling velocity is not an absolute separation. In general, a fifty percent particle cut point will be achieved whereby 50% of the 10 micrometer AED particles in the fluid sample 120 will settle into the basin 155. The balance of particles will be outputted for particulate matter analysis.

As the size of the particle becomes greater than an aerodynamic equivalent diameter of 10 micrometers, an increasing percentage of such particulate matter in the fluid sample 120 will settle into the basin 155 and those particles smaller than a 10 micrometer AED will have a decreasing percentage of settling (an increased percentage will be exhausted from output port 110). This relationship can be represented by the following equation:

$$V = \frac{Q}{A} \qquad (equation\ 1)$$

where V = velocity;
Q = flow rate; and
A = cross-sectional area of conduit.

In one embodiment, the cross-sectional area (A) of the conduit 108 is fixed and therefore the flow rate (Q) can be varied to achieve a fluid sample velocity (V) that is equal to the settling velocity of a particle of a given aerodynamic equivalent diameter (AED) and carrier gas temperature.

In accordance with another embodiment, note that the conduit 108 can be configured to include a cross-sectional area that is adjustable. This can be achieved via mechanical manipulation of the conduit 108 (e.g., squeezing or expansion) to adjust the inside diameter of the conduit 108. Thus, assuming the fluid sample 120 is inputted at a substantially constant rate, the diameter of the conduit 108 can be adjusted to change the velocity of the gas in the fluid sample 120 through the conduit 108.

It should be noted that the AED is a commonly used term in aerosol science and technology. This term refers to a diameter that is a measurable index of a particle. When a particle is reported by a technique, the measurement usually corresponds to a specific physical property. For instance, aerodynamic equivalent diameter (a.k.a. aerodynamic diameter) is the diameter of a standard density (1 gram per cubic centimeter) sphere having the same gravitational settling velocity as the particle being measured (which may be of a non-spherical shape and/or non-standard density).

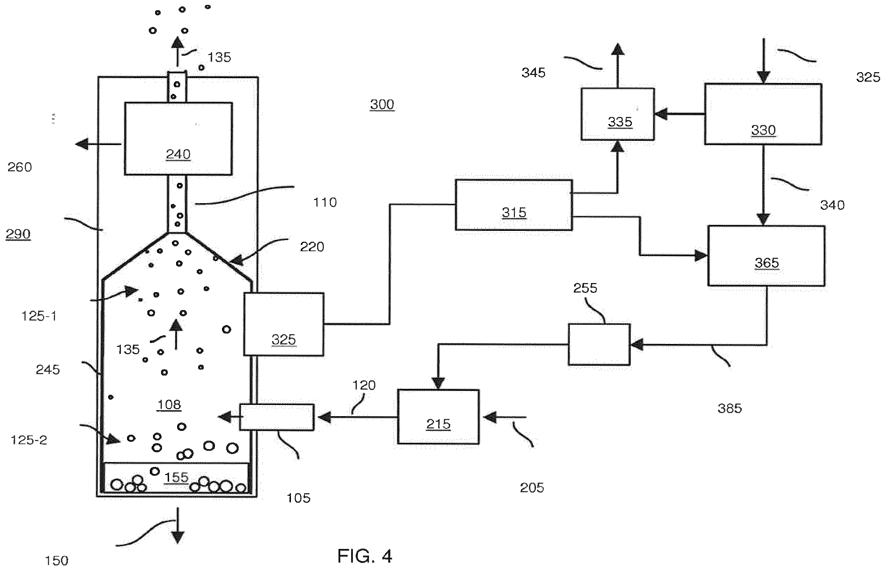

FIG. 4 is an example diagram illustrating relative humidity control according to embodiments herein.

As shown, the particulate monitor system 300 includes many components as previously discussed with respect to earlier figures. Additionally, FIG. 4 includes resources to control a relative humidity of the fluid sample 120 in conduit 108. For example, particulate monitor system 300 includes relative humidity sensor 325, controller 315, flow control assembly 335 (e.g., one or more valves, vents, etc.), pneumatic dryer 330, and hydrator 365.

As its name suggests, relative humidity sensor 325 detects a relative humidity of the fluid sample 120 passing through conduit 108. Controller 315 (e.g., relative humidity controller) monitors the relative humidity of the fluid sample 120 in conduit 108 as indicated by feedback signals received from relative humidity sensor 325.

Based on the feedback signals from relative humidity sensor 325 indicating the relative humidity of the fluid sample 120, the controller 315 controls the relative humidity of dilution gas 385. For example, via the signals received from relative humidity sensor 325, the controller 315 controls the relative humidity of the dilution gas 385. Because the dilution gas 385 is mixed with gas sample 205 to produce fluid sample 120, the adjusting the relative humidity of the dilution gas 385 effectively controls a relative humidity of the fluid sample 120 (which comprises gas sample 205 diluted with dilution gas 385).

During operation, pneumatic dryer 330 receives compressed gas 325. If the relative humidity of the fluid sample 120 as measured by the relative humidity sensor 325 is too high, the controller 315 controls flow control assembly 335 to remove more water from the compressed gas 325 to produce dried gas 340. If the relative humidity of the fluid sample 120 as measured by the relative humidity sensor 325 is too low, the controller 315 controls flow control assembly 335 to remove less or no water from the compressed gas 325 to produce dried gas 340.

The controller 315 can control the hydrator to add water. For example, if the relative humidity of the fluid sample 120 as indicated by relative humidity sensor 325 is too low, the controller 315 adds water to the dried gas 340 via activation of hydrator 365 to produce dilution gas 385. Adding water to the dried gas 340 increases a relative humidity of the dilution gas 385. Conversely, if the relative humidity of the fluid sample 120 is too high, the controller 315 can deactivate the hydrator 365 to prevent addition of water to the dried gas 340. In such an instance, the dilution gas 385 is equivalent to the dried gas 340 without addition of water.

Accordingly, the controller can initiate removal or addition of water to the compressed gas 325 to produce dilution gas 385.

Sample Relative Humidity Control Using Dynamic Dilution Gas Dew Point Control

As previously discussed, a dilution gas 385 can be mixed with the gas sample 205 extracted from a flue to produce fluid sample 120. Via controlling the temperature of the conduit 108, the fluid sample 120 in the conduit 108 equilibrates to the same temperature of the enclosure through the use of thermally conductive wetted components. As mentioned, the conduit 108 can be configured to include a temperature and relative humidity sensing assembly (e.g., relative humidity sensor 325).

The temperature of the fluid sample 120 entering the mass monitor 240 can be controlled by controlling the temperature of the output port 110. Also, as mentioned, control of the relative humidity of the fluid sample 120 can be achieved by adjusting the relative humidity of the dilution gas 385.

In accordance with one embodiment, compressed gas such as air is delivered to a pneumatic dryer 330. Any moisture removed from the compressed air can be vented to the atmosphere via flow control assembly 335. By varying the atmospheric venting of moisture from the compressed gas 325, the dew point of the dilution gas 385 is controlled.

As an example, if the moisture of an emission source contains 30% water and the extracted sample is diluted by a factor of 16, the moisture content can be reduced to 1.83% and create a diluted sample of 70% relative humidity at 30 deg C. Should the moisture content of the gas sample 205 decrease, the atmospheric venting can be reduced thereby increasing the dew point of the dilution gas 385 in order to maintain the fluid sample 120 at a substantially constant relative humidity.

In accordance with FIG. 4, in one embodiment, it should be understood that volumetric flow rate within the probe 215 can be held to a substantially constant flow value by holding the dilution ratio constant, thereby supporting the theoretical design for particle penetration for particles of a known size. Variation in the volume of dilution gas 385 through the probe would change the flow regime and may alter the particle penetration efficiency. The feedback loop of relative humidity measurement within the particulate monitor system 300 can facilitate holding or maintaining the relative humidity or dewpoint of the fluid sample to a near or substantially constant reference condition (e.g., 70% relative humidity).

Furthermore, should the relative humidity of the fluid sample 120 fall below the reference condition and the dew point of the dilution gas 385 cannot be raised to a sufficient value via lack of venting via flow control assembly 335, as mentioned, the hydrator 365 can provide the needed moisture back into the dried gas 340. Accordingly, the moisture content of the dilution gas 385 can be controlled to regulate a relative humidity of the fluid sample 120 inputted to conduit 108.

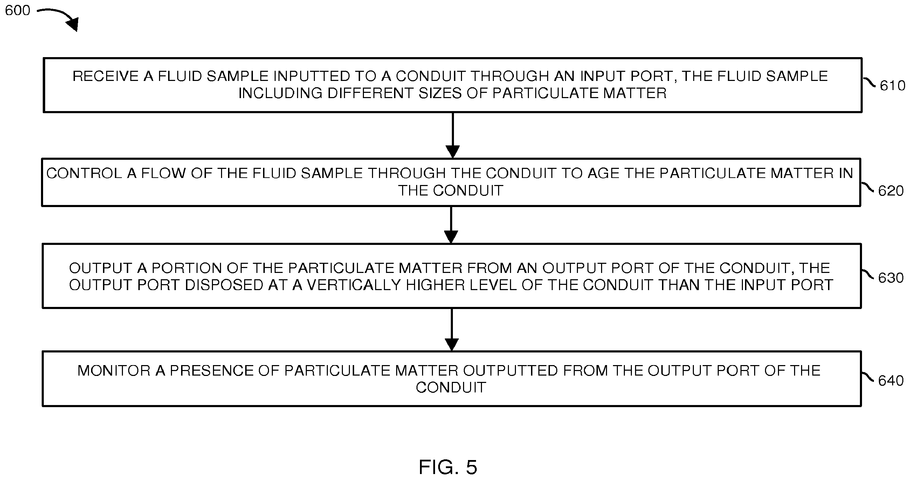

FIG. 5 is a flowchart 600 illustrating a method of controlling environmental parameters for analyzing a gas sample according to embodiments herein. Note that there will be some overlap with respect to concepts discussed above for FIGS. 1 through 4.

In step 610, the particulate monitor system receives a fluid sample 120 inputted to conduit 108 through an input port 105. The fluid sample 120 includes different sizes of particulate matter.

In step 620, the particulate monitor system controls a flow of the fluid sample 120 through the conduit to age the particulate matter in the conduit 108.

In step 630, the particulate monitor system outputs a portion of the particulate matter from an output port 110 of the conduit 108. The output port 110 is disposed at a vertically higher level of the conduit 108 than the input port 105.

In step 640, the particulate monitor system monitors a presence of particulate matter outputted from the output port 110 of the conduit 108.

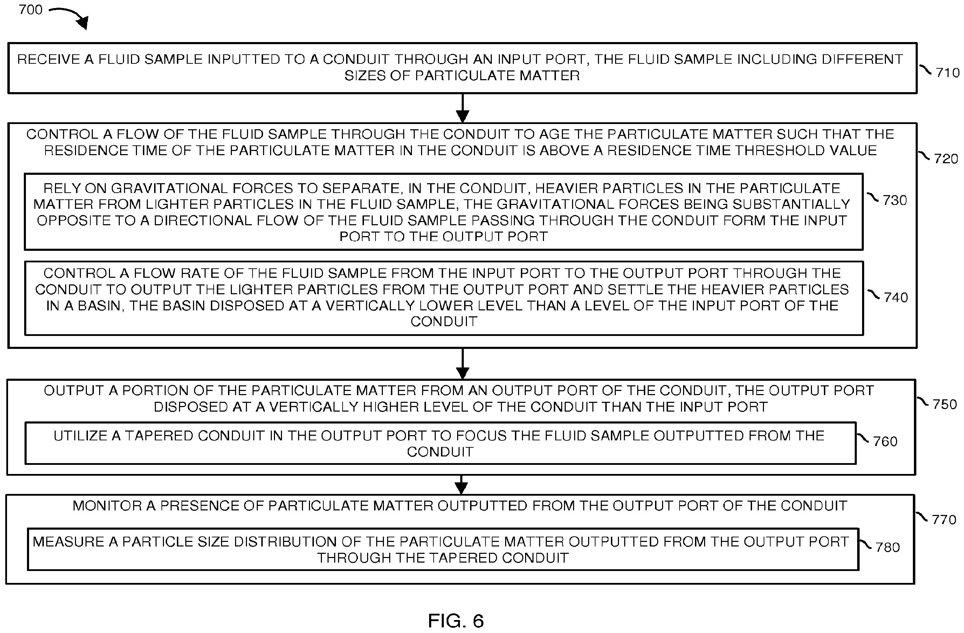

FIG. 6 is a flowchart 700 illustrating a method of implementing a particulate monitor system according to embodiments herein. Note that there will be some overlap with respect to concepts discussed above.

In step 710, the particulate monitor system receives a fluid sample 120 inputted to a conduit 108 through an input port 105. The fluid sample 120 includes different sizes of particulate matter.

In step 720, the particulate monitor system controls a vertical flow of the fluid sample 120 through the conduit 108 to age the particulate matter such that the residence time of the particulate matter in the conduit 108 is above a residence time threshold value.

In step 730, the particulate monitor system relies on or utilizes gravitational forces to separate, in the conduit 108, heavier particles in the fluid sample 120 from lighter particles in the fluid sample 120. In one embodiment, the gravitational forces are substantially opposite to a directional flow 135 of the fluid sample 120 passing through the conduit 108 from the input port 105 to the output port 110.

In step 740, the particulate monitor system controls a flow rate of the fluid sample 120 from the input port 105 to the output port 110 through the conduit 108 to output the lighter particles (e.g., particulate matter of smaller aerodynamic equivalent diameter having a settling velocity below a threshold value) from the output port 110 and settles the heavier particles (e.g., particulate matter of larger aerodynamic equivalent diameter having a settling velocity above a threshold value) in a basin 155. The basin 155 is disposed at a vertically lower level than a level of the input port 105 of the conduit 108.

In step 750, the particulate monitor system outputs a portion of the particulate matter in the fluid sample 120 from an output port 110 of the conduit 108. The output port 110 is disposed at a vertically higher level of the conduit 110 than the input port 105.

In step 760, the particulate monitor system utilizes a tapered end of the conduit 108 (e.g., taper 220) in the output port 105 to focus the fluid sample 120 outputted from the conduit 120 for analysis by mass monitor 240.

In step 770, the particulate monitor system monitors a presence of particulate matter outputted from the output port 105 of the conduit 108.

In step 780, the particulate monitor system measures a particle size distribution of the particulate matter in fluid sample 120 as outputted through the taper 220 and the output port 105 of conduit 108.

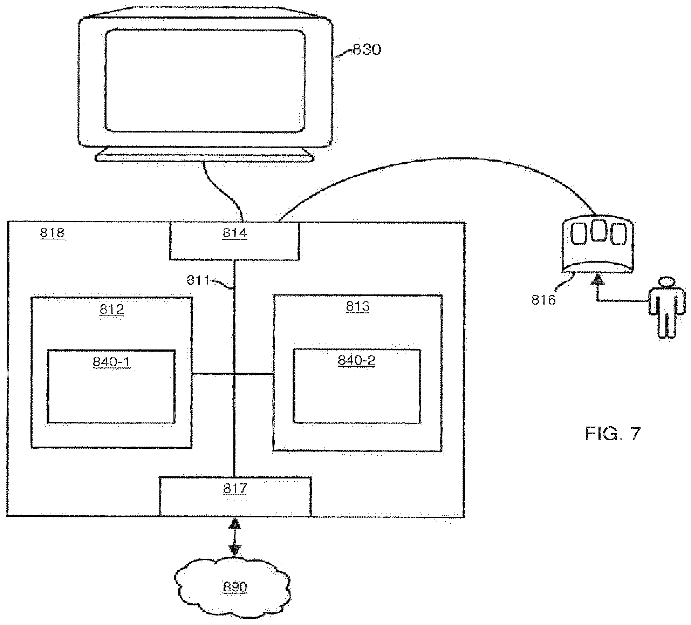

FIG. 7 is a block diagram of an example architecture of a respective computer system 818 such as one or more computers, processes, etc., for implementing any controller functions, analyzer functions, monitoring functions, etc., supported by particulate monitor system according to embodiments herein. In other words, the particulate monitor system can include computer hardware and/or computer software to carry out techniques as discussed herein that are suitable for execution by a computer.

Computer system 818 can include one or more computerized devices such as personal computers, workstations, portable computing devices, consoles, network terminals, networks, processing devices, etc.

Note that the following discussion provides a basic example embodiment indicating how to carry out suitable functionality associated with the particulate monitor system as discussed above and below. However, it should be noted again that the actual configuration for carrying out the particulate matter monitor system can vary depending on a respective application. For example, as previously discussed, computer system 818 can include one or multiple computers that carry out the processing as described herein.

As shown, computer system 818 of the present example includes an interconnect 811 coupling memory system 812, a processor 813, I/O interface 814, and a communications interface 817.

I/O interface 814 provides connectivity to peripheral devices such as repository and other devices 816 (if such devices are present) such as a keyboard, mouse (e.g., selection tool to move a cursor), display screen 830, etc.

Communications interface 817 enables the particulate matter monitor application 840-1 of computer system 818 to communicate over network 890 and, if necessary, retrieve data, update information, etc., from different sources.

As shown, storage 812 can be encoded with instructions associated with particulate matter monitor application 840-1. The instructions support functionality as discussed above and as discussed further below. The particulate matter monitor application 840-1 (and/or other resources as described herein) can be embodied as software code such as data and/or logic instructions on storage 812 such as a tangible and/or intangible computer readable medium, media, etc. such as memory or on another computer readable medium that supports processing functionality according to different embodiments described herein.

During operation of one embodiment, processor 813 accesses storage 812 via the use of interconnect 811 in order to launch, run, execute, interpret or otherwise perform the logic instructions of the particulate matter monitor application 840-1. Execution of the particulate matter monitor application 840-1 produces processing functionality in particulate matter monitor process 840-2. In other words, the particulate matter monitor process 840-2 represents one or more portions of the particulate monitor system performing within or upon the processor 813 in the computer system 818.

It should be noted that, in addition to the particulate matter monitor process 840-2 that carries out one or more method operations as discussed herein, other embodiments herein include the particulate matter monitor application 840-1 itself such as the un-executed or non-performing logic instructions and/or data, etc. The particulate matter monitor application 840-1 may be stored on a computer readable medium (e.g., storage 812) such as a floppy disk, hard disk, an optical medium, etc. According to other embodiments, the particulate matter monitor application 840-1 can also be stored in a memory type system such as in firmware, read only memory (ROM), or, as in this example, as executable code within the storage 812.

Detailed Description of Extraction Nozzle Embodiments

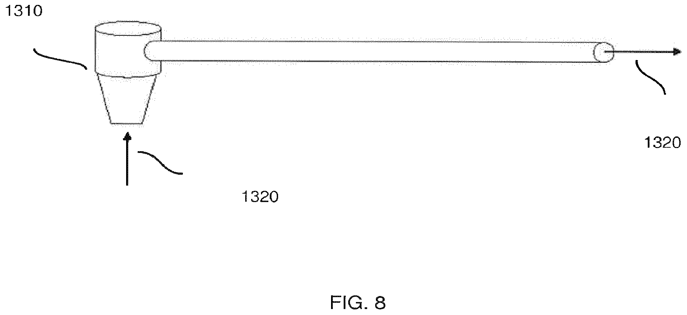

FIG. 8 is an example diagram of a nozzle according to conventional techniques. Extraction of particulate matter from a flue has historically been accomplished with an isokinetic nozzle 1310. An isokinetic nozzle has a sharp tapered edge and its inside diameter is sized such that the velocity of the extracted sample entering the nozzle is approximately equal to the velocity of the flue gas so that the particulate extraction is not biased.

While the use of a conventional isokinetic nozzle 1310 is typically adequate for a relatively short duration, its main drawback for a continuous monitoring system would occur during a period of purge (a.k.a., blowback) during which a compressed air source is used to purge the interior probe and outer nozzle surface of any accumulated debris.

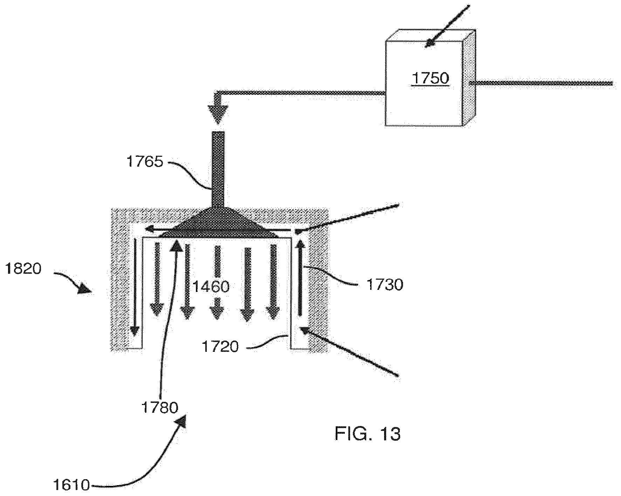

With reference to FIG. 13, an example of a tapered isokinetic nozzle 1310 is shown. It should be understood that during a period of so-called blowback (reverse direction of the direction of sample 1320 shown in FIG. 13), the tapered nozzle 1310 becomes a restriction and the interior nozzle walls act as an impaction surface whereby buildup of particulate can occur. Furthermore, should the flue gas velocity change, either the sample extraction flow rate must change or a new nozzle must be installed.

Another main concern is with regard to the buildup of particulate or condensed matter on the exterior of the probe-nozzle assembly such as nozzle 1310. For example, a probe or nozzle 1310 that has undergone multiple months of use in a flue without cleaning can be covered with excess matter, inhibiting its performance. In general, if the environment under test is clean of particles, the performance of the nozzle typically will not be clean and not hindered. However, the extraction of particulate from a sample is highly dependent upon the science of fluid mechanics and aerosol physics. Thus, a solution may be necessary to facilitate the prolonged performance requirements of the probe-nozzle assembly.

In contrast to conventional techniques, one embodiment herein includes novel extraction for use in an application such as particulate monitoring. One embodiment herein includes a universal isokinetic probe for range of industrial source emission flue velocities. The exterior surface of a nozzle application as discussed herein can include continuous purging (e.g., blowing a purge air outward from the surface of the nozzle) the nozzle and/or portions of the nozzle assembly to mitigate external mass accumulation.

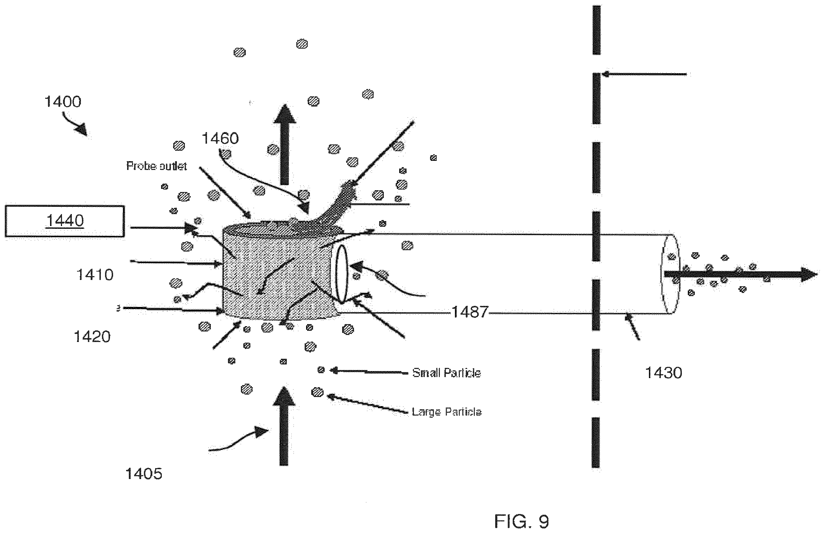

FIG. 9 is an example diagram illustrating a system according to embodiments herein.

Embodiments herein include a nozzle-probe assembly 1400. A fluid sample 1405 such as a gas or liquid under test passes through nozzle 1410 in a direction as shown. The nozzle 1410 can include a knife-edged perimeter 1420 and a substantial opening to allow passage of a fluid sample 1405.

With respect to the nozzle 1410, a "cross-probe-jet" 1440 produces air curtain or cross flow 1460 of gas or liquid orthogonal to the flow of fluid sample 1405. Thus, a gas or liquid can be blown substantially perpendicular or orthogonal to the direction of flow of the fluid sample 1405 either at the entrance or exit of nozzle 1410 with respect to a flow of fluid sample 1405.

In one embodiment, the force (volume) of air provided by cross probe jet 1440 is substantially constant and substantially proportional to the velocity of the fluid sample 1405 such that the larger particles (e.g., particulate matter above an aerodynamic equivalent diameter threshold value) of little interest in the fluid sample 1405 have sufficient inertia to travel through the substantially orthogonal air curtain and exit the nozzle 1410 while the smaller particles of interest in the fluid sample 1405 are guided or pushed into and through the probe 1430 through an opening 1487 in the side of nozzle 1410 and discharged.

In one embodiment, the particulate matter in the probe 1430 as extracted from the fluid sample 1405 can be inputted to conduit 108 as discussed above for extraction and/or separation of particulate matter.

In one embodiment, the diameter of the nozzle 1410 is universal for multiple different stack velocities. In such an embodiment, by varying the opposing air curtain flow rate provided by jet 1440, a particle discrimination efficiency value can be maintained for sample extraction. For wet and dry emission sources this particle discrimination efficiency would be for particles less than 40 micrometers and 10 micrometers, respectively. In one embodiment, the air curtain or cross flow 1460 created by jet 1440 can have an upward curve caused by a flow of the fluid sample 1405 through the nozzle 1410.

In accordance with another embodiment, a continuous amount of purge air can be constantly released by the exterior surface of the nozzle 1410 in an effort to mitigate surface deposition. This can be achieved via creating at least a portion of the nozzle 1410 out of a sintered, porous material that a flow of gas to permeate its surface when a pressurized fluid is applied. Release of the fluid though the porous surface of the nozzle and radially outward from the nozzle reduces particle deposition on the nozzle to keep it clean from hindering debris.

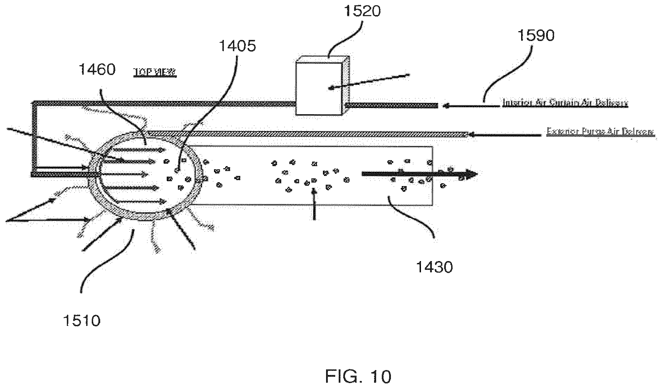

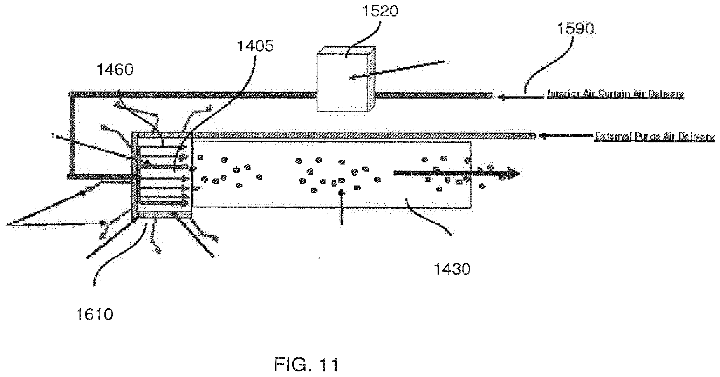

FIGS. 10 and 11 illustrate a top view of two conceptual nozzles according to embodiments herein.

More specifically, FIG. 10 illustrates use of a circular nozzle 1510 (in accordance with a top view as viewed along an axis of the flow of fluid sample 1405 out of the page) according to embodiments herein.

As its name suggests, flow controller 1520 controls the fluid flow rate of cross flow 1460 creating a force in a substantially orthogonal direction with respect to the flow of the fluid sample 1405. As mentioned above, smaller particles of interest pass into and through probe 1430 for further analysis.

In one embodiment, the circular extraction nozzle 1510 may create a U-shaped pressure wave.

Purge fluid 1590 supplied to nozzle 1510 and emanating outward from porous walls of nozzle 1510 reduces or prevents deposition of particulate matter on the outer surface of nozzle 1510. Details of the nozzle 1510 are shown in subsequent figures.

FIG. 11 illustrates a nozzle and respective particulate matter extraction system according to embodiments herein. The nozzle 1610 can be rectangular shaped from a top view as viewed along an axis of the flow of fluid sample 1405 out of the page.

In one embodiment, the rectangular nozzle 1610 can be used to maintain a uniform wave of pressure across the probe entrance. Flow controller 1520 and purge fluid 1590 operate in a similar manner as discussed above to reduce a deposition of particulate matter on the nozzle 1610.

Thus, the purge fluid 1590 and cross flow 1460 each supports different functionality.

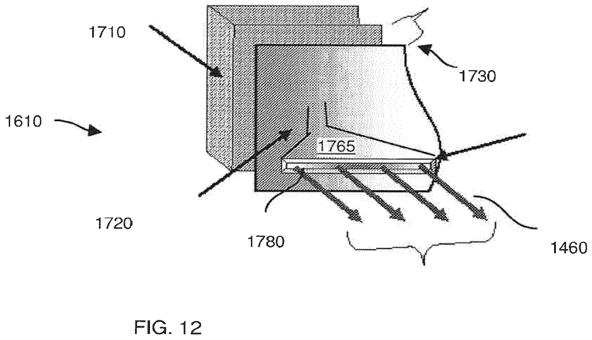

FIG. 12 is an example diagram illustrating a cutaway view of a nozzle 1610 according to embodiments herein. FIG. 13 is an example diagram illustrating a top view of a nozzle 1610 as viewed along an axis of flow of fluid sample 1405 according to embodiments herein.

In accordance with such embodiments, the wall of nozzle 1610 as shown comprises a gap 1730 separating porous material 1710 (on an outer wall 1820 of nozzle 1610) and impermeable material 1720 (on an inner wall or surface of nozzle 1610). Opening 1780 in conduit 1765 and inner wall (e.g., impermeable material 1720) of nozzle 1610 provides a path in which to channel cross flow 1460 of gas or liquid substantially orthogonal to a direction flow of fluid sample 1405 to push lighter particulate matter in the fluid sample 1405 into the probe 1430.

In one embodiment, the purge air delivery forces purge fluid 1590 into gap 1730. The pressure of purge fluid 1590 causes the purge fluid 1590 to emanate radially outward from the porous surface (e.g., through porous material 1710) of the extraction nozzle 1610.

As mentioned, the purge fluid 1590 can be a gas or liquid. Additionally the purge fluid can be or intermittently include a cleaning solution to clean the surface of nozzle 1710. As mentioned, the inner surface of the extraction nozzle can be impermeable material 1720 such that the purge fluid does not affect a flow of the fluid sample 1405 passing through a core of the extraction nozzle 1610.

In one embodiment, the air curtain air delivery system (e.g., conduit 1765 and opening 1780) imparts a substantially orthogonal flow of gas and/or liquid as provided by flow controller 1750) to the fluid sample 1405 passing through the extraction nozzle 1610 so as to force particulate matter of a certain size (e.g., lighter particulate matter, smaller particles, etc.) into an orthogonally disposed conduit (e.g., probe 1430) as opposed to passing through and out an opposite end of the extraction nozzle 1610.

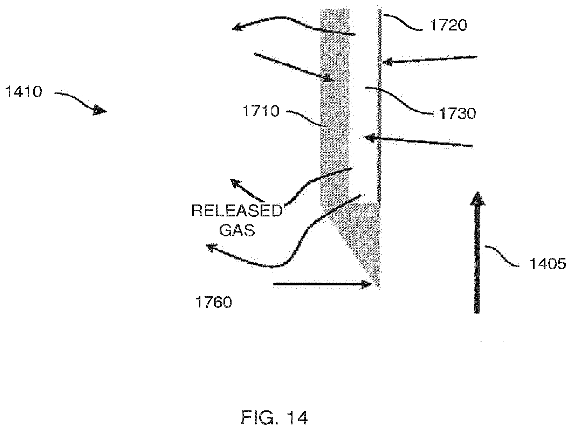

FIG. 14 is an example diagram illustrating a side view cutaway of a nozzle according to embodiments herein.

As previously discussed, and as shown in FIG. 14, any of the nozzles as discussed herein can be made of porous material 1710 and impermeable material 1720 with a respective gap 1730 in between. Nozzle 1410 can be configured to include knife edge 1760 to facilitate flow of the fluid sample 1405 through the nozzle. As mentioned, the gap 1730 can be pressurized with a urge fluid 1590 that radially exhausts as shown by flow of released purge fluid to reduce particulate matter deposition.

Note again that techniques herein are well suited for use in separating and/or aging particulate matter in a fluid sample. However, it should be noted that embodiments herein are not limited to use in such applications and that the techniques discussed herein are suited for other applications as well.

## Claims

1. A method for monitoring the presence of particulate matter (125) in a fluid sample (120), the method comprising:

  receiving the fluid sample (120) inputted to a conduit (108) through an input port (105), the fluid sample (120) including different sizes of particulate matter (125), the conduit (108) extending vertically from the input port (105) to an output port (110), the output port (110) disposed at a vertically higher level of the conduit (108) than the input port (105);
  controlling a flow of the fluid sample (120) through the conduit (108) from the input port (105) to the output port (110) to age the particulate matter (125) resident in the conduit, a first portion of the particulate matter (125) resident in the conduit (108) reducing in aerodynamic equivalent diameter size due to the aging;
  outputting the first portion of the particulate matter (125) in the fluid sample (120) from the output port (110) of the conduit (108); and
monitoring a presence of the first portion of the particulate matter (125) outputted from the output port (110) of the conduit (108); the method further comprising:

utilizing gravitational forces to separate, in the conduit (108), particles comprising a higher aerodynamic equivalent diameter size in the fluid sample (120) from particles comprising a lower aerodynamic equivalent size in the fluid sample (120);
simulating aging of the particulate matter (125) by controlling environmental parameters of the fluid sample (120) in the conduit (108), wherein the environmental parameters comprise the temperature of the fluid sample (120) or the relative humidity of the fluid sample (120), in which a second portion of the particulate matter (125) received from the input port (105) increases in aerodynamic equivalent size during the aging based on the controlled environmental parameters, the second portion of the particulate matter settling in a basin (155) of the conduit (108) below the input port (105) due to the gravitational forces as opposed to being otherwise outputted from the output port (110) with particles of the particulate matter that do not have a high enough aerodynamic equivalent diameter size to settle in the basin (155) due to the gravitational forces.

2. The method as in claim 1, wherein the gravitational forces are substantially opposite to a directional flow (135) of the fluid sample (120) passing through the conduit (108) from the input port (105) to the output port (110); and
wherein outputting the first portion of the particulate matter (125) includes outputting the first portion of the particulate matter (125) in a vertical direction through the output port (110) to a mass monitoring system (240), the vertical direction being substantially similar to a direction of the vertical flow of the fluid sample (120) through the conduit (108).

3. The method as in claim 1 further comprising:
controlling a flow rate of the fluid sample (120) from the input port (105) to the output port (110) through the conduit (108) to: i) separate the particles comprising a higher aerodynamic equivalent diameter size and the particles comprising a lower aerodynamic equivalent size from each other, ii) output the particles comprising a lower aerodynamic equivalent size from the output port (110), and iii) settle the particles comprising a higher aerodynamic equivalent diameter size in the basin (155), the basin (155) disposed at a vertically lower level than a level of the input port (105) of the conduit (108).

4. The method as in claim 1, wherein controlling the flow of the fluid sample (120) through the conduit (108) to age the particulate matter (125) includes:
controlling a rate of the fluid sample (120) through the conduit (108) such that the residence time of the particulate matter (125) in the conduit (108) is above a threshold value.

5. The method as in claim 1 further comprising:
controlling a rate of the flow of the fluid sample (120) through the conduit (108) to control which size of the different sizes of particulate matter (125) in the fluid sample (120) pass through the output port (110) of the conduit (108).

6. A particulate monitor system (300) for monitoring the presence of particulate matter (125) in a fluid sample (120), the particulate monitor system comprising:

a conduit (108) configured to receive the fluid sample (120) through an input port (105), the fluid sample (120) including different sizes of particulate matter (125);
a flow controller (255) to control a flow rate of the fluid sample (120) through the conduit (108) to age the particulate matter (125) resident in the conduit (108), aging of the particulate matter reducing an aerodynamic equivalent diameter of a first portion of the particulate matter (125) resident in the conduit (108);
a basin (155) disposed at a vertically lower level than a level of the input port (105) of the conduit (108);
an output port (110) disposed at a vertically higher level of the conduit (108) than the input port (105), the output port (110) configured to output the first portion of the particulate matter (125) in the fluid sample (120); and
a monitor (240) to analyze a presence of the first portion of the particulate matter (125) outputted from the output port (110) of the conduit (108);
wherein gravitational forces separate particles comprising a higher aerodynamic equivalent diameter size from particles comprising a lower aerodynamic equivalent size in the fluid sample (120);
and
wherein the controller (255) comprises controlling means (268,315) to control environmental parameters of the fluid sample (120) in the conduit (108), wherein the environmental parameters comprise the temperature of the fluid sample (120) or the relative humidity of the fluid sample (120), to simulate aging of the particulate matter (125) in which a second portion of the particulate matter (125) received from the input port (105) increases in aerodynamic equivalent size based on the controlled environmental parameters and settles in the basin (155) due to the gravitational forces.

7. The particulate monitor system (300) as in claim 6, wherein the gravitational forces are substantially opposite to a directional flow (135) of the fluid sample (120) passing through the conduit (108) from the input port (105) to the output port (110).

8. The particulate monitor system (300) as in claim 6, wherein the flow controller (255) controls a flow rate of the fluid sample (120) from the input port (105) to the output port (110) through the conduit (108) to: i) separate the particles comprising a higher aerodynamic equivalent diameter size and the particles comprising a lower aerodynamic equivalent size in the conduit (108), ii) output the particles comprising a lower aerodynamic equivalent size from the conduit (108) through the output port (110), and iii) settle the particles comprising a higher aerodynamic equivalent diameter size in the basin (155), the basin (155) being disposed at a vertically lower level than a level of the input port (105).

9. The particulate monitor system (300) as in claim 6 further comprising:
a temperature controller (268) to control a temperature of the fluid sample (120) in the conduit (108).

10. The particulate monitor system (300) as in claim 6, wherein the flow controller (255) controls a rate of the fluid sample (120) through the conduit (108) such that the residence time of the particulate matter (125) in the conduit (108) is above a threshold value.

11. The particulate monitor system (300) as in claim 6, wherein the flow controller (255) controls a rate of the flow of the fluid sample (120) through the conduit (108) to control which portion of the different sizes of particulate matter (125) in the fluid sample (120) overcome the gravitational forces and pass through the output port (110) of the conduit (108).

**Patentansprüche**

1. Verfahren zum Überwachen des Vorhandenseins von Partikelmaterial (125) in einer Fluidprobe (120), wobei das Verfahren Folgendes umfasst:

Empfangen der in eine Leitung (108) eingegebenen Fluidprobe (120) durch eine Eingangsöffnung (105), wobei die Fluidprobe (120) unterschiedliche Größen von Partikelmaterial (125) enthält, wobei sich die Leitung (108) vertikal von der Eingangsöffnung (105) zu einer Ausgangsöffnung (110) erstreckt, wobei die Ausgangsöffnung (110) auf einem vertikal höheren Niveau der Leitung (108) als die Eingangsöffnung (105) angeordnet ist;
Steuern eines Flusses der Fluidprobe (120) durch die Leitung (108) von der Eingangsöffnung (105) zu der Ausgangsöffnung (110), um das in der Leitung befindliche Partikelmaterial (125) zu altern, wobei der aerodynamische Äquivalentdurchmesser eines ersten Teils des Partikelmaterials (125), der sich in der Leitung (108) befindet, aufgrund der Alterung verringert wird;
Ausgeben des ersten Teils des Partikelmaterials (125) in der Fluidprobe (120) von der Ausgangsöffnung (110) der Leitung (108); und
Überwachen eines Vorhandenseins des ersten Teils des Partikelmaterials (125), der von der Ausgangsöffnung (110) der Leitung (108) ausgegeben wird; wobei das Verfahren ferner Folgendes umfasst:

Verwenden von Gravitationskräften, um Partikel mit einem höheren aerodynamischen Äquivalentdurchmesser in der Fluidprobe (120) von Partikeln in der Leitung (108) zu trennen, die eine geringere aerodynamische Äquivalentgröße in der Fluidprobe (120) aufweisen;
Simulieren der Alterung des Partikelmaterials (125) durch Steuern der Umgebungsparameter der Fluidprobe (120) in der Leitung (108), wobei die Umgebungsparameter die Temperatur der Fluidprobe (120) oder die relative Feuchtigkeit der Fluidprobe (120) umfassen, bei dem ein zweiter Teil des aus der Eingangsöffnung (105) erhaltenen Partikelmaterials (125) während der Alterung aufgrund der kontrollierten Umgebungsparameter an aerodynamischer Äquivalentgröße zunimmt, wobei sich der zweite Teil des Partikelmaterials in einem Becken (155) der Leitung (108) unterhalb der Eingangsöffnung (105) aufgrund der Gravitationskräfte absetzt, anstatt anderweitig aus der Ausgangsöffnung (110) mit Partikeln des Partikelmaterials abgegeben zu werden, deren aerodynamischer Äquivalentdurchmesser unzureichend ist, um sich im Becken (155) aufgrund der Gravitationskräfte abzusetzen.

2. Verfahren nach Anspruch 1, wobei die Gravitationskräfte zu einem gerichteten Fluss (135) der Fluidprobe (120) durch die Leitung (108) von der Eingangsöffnung (105) zu der Ausgangsöffnung (110) im Wesentlichen entgegengesetzt sind; und
wobei das Ausgeben des ersten Teils des Partikelmaterials (125) das Ausgeben des ersten Teils des Partikelmaterials (125) in einer vertikalen Richtung durch die Ausgangsöffnung (110) an ein Massenüberwachungssystem (240) umfasst, wobei die vertikale Richtung im Wesentlichen ähnlich ist zu einer Richtung des vertikalen Flusses der Fluidprobe (120) durch die Leitung (108).

3. Verfahren nach Anspruch 1, ferner umfassend: Steuern einer Flussrate der Fluidprobe (120) von der Eingangsöffnung (105) zu der Ausgangsöffnung (110) durch die Leitung (108) um:

   i) die Partikel, die einen größeren aerodynamischen Äquivalentdurchmesser aufweisen, und die Partikel, die eine niedrigere aerodynamische Äquivalentgröße aufweisen, voneinander zu trennen, ii) die Partikel, die eine niedrigere aerodynamische Äquivalentgröße aufweisen, von der Ausgangsöffnung (110) auszugeben und iii) die Partikel umfassend einen größeren aerodynamischen Äquivalentdurchmesser in dem Becken (155) abzusetzen, wobei das Becken (155) auf einem vertikal niedrigeren Niveau als ein Niveau der Eingangsöffnung (105) der Leitung (108) angeordnet ist.

4. Verfahren nach Anspruch 1, wobei das Steuern des Flusses der Fluidprobe (120) durch die Leitung (108) zum Altern des Partikelmaterials (125) Folgendes umfasst:
   Steuern einer Rate der Fluidprobe (120) durch die Leitung (108), so dass die Verweilzeit des Partikelmaterials (125) in der Leitung (108) über einem Schwellenwert liegt.

5. Verfahren nach Anspruch 1, ferner umfassend:
   Steuern einer Flussrate der Fluidprobe (120) durch die Leitung (108), um zu steuern, welche Größe der verschiedenen Größen des Partikelmaterials (125) in der Fluidprobe (120) durch die Ausgangsöffnung (110) der Leitung (108) gelangt.

6. Partikelüberwachungssystem (300) zum Überwachen des Vorhandenseins von Partikelmaterial (125) in einer Flüssigkeitsprobe (120), wobei das Partikelüberwachungssystem Folgendes umfasst:

   eine Leitung (108), die konfiguriert ist, um die Fluidprobe (120) durch einen Eingangsöffnung (105) aufzunehmen, wobei die Fluidprobe (120) verschiedene Größen von Partikelmaterial (125) enthält;
   eine Flusssteuerung (255) zum Steuern einer Flussrate der Fluidprobe (120) durch die Leitung (108), um das in der Leitung (108) befindliche Partikelmaterial (125) zu altern, wobei das Altern des Partikelmaterials einen aerodynamischen Äquivalentdurchmesser eines ersten Teils des in der Leitung (108) befindlichen Partikelmaterials (125) reduziert;
ein Becken (155), das auf einem vertikal niedrigeren Niveau als ein Niveau der Eingangsöffnung (105) der Leitung (108) angeordnet ist;
eine Ausgangsöffnung (110), die auf einem vertikal höheren Niveau der Leitung (108) als die Eingangsöffnung (105) angeordnet ist, wobei die Ausgangsöffnung (110) konfiguriert ist, den ersten Teil des Partikelmaterials (125) in der Fluidprobe (120) auszugeben; und
eine Überwachungseinrichtung (240) zum Analysieren des Vorhandenseins des ersten Teils des Partikelmaterials (125), der von der Ausgangsöffnung (110) der Leitung (108) ausgegeben wird;
wobei die Gravitationskräfte Partikel mit einem größeren aerodynamischen Äquivalentdurchmesser von Partikeln trennen, die eine geringere aerodynamische Äquivalentgröße in der Fluidprobe (120) aufweisen; und
wobei die Steuerung (255) eine Steuereinrichtung (268, 315) zum Steuern von Umgebungsparametern der Fluidprobe (120) in der Leitung (108) umfasst, wobei die Umgebungsparameter die Temperatur der Fluidprobe (120) oder die relative Feuchtigkeit der Luft der Fluidprobe (120) umfassen, um die Alterung der Partikel (125) zu simulieren, bei denen ein zweiter Teil des Partikelmaterials (125), der von der Eingangsöffnung (105) erhalten wird, aufgrund der gesteuerten Umgebungsparameter an aerodynamischer Äquivalentgröße zunimmt und in dem Becken (155) aufgrund der Gravitationskräfte abgesetzt wird.

7. Partikelüberwachungssystem (300) nach Anspruch 6, wobei die Gravitationskräfte im Wesentlichen entgegengesetzt zu einem gerichteten Fluss (135) der Fluidprobe (120) sind, die durch die Leitung (108) von der Eingangsöffnung (105) zu der Ausgangsöffnung (110) durchtritt.

8. Partikelüberwachungssystem (300) nach Anspruch 6, wobei die Flusssteuerung (255) eine Flussrate der Fluidprobe (120) von der Eingangsöffnung (105) zu der Ausgangsöffnung (110) durch die Leitung (108) steuert, zum:

   i) Trennen der Partikel mit einem größeren aerodynamischen Äquivalentdurchmesser und der Partikel mit einer niedrigeren aerodynamischen Äquivalentgröße in der Leitung (108), ii) Ausgeben der Partikel, die eine geringere aerodynamische Äquivalentgröße aufweisen, aus der Leitung (108) durch die Ausgangsöffnung (110) und iii) Absetzen der Partikel, die einen größeren aerodynamischen Äquivalentdurchmesser in dem Becken (155) aufweisen, wobei das Becken (155) auf einem vertikal niedrigeren Niveau als ein Niveau der Eingangsöffnung (105) angeordnet ist.

**9.** Partikelüberwachungssystem (300) nach Anspruch 6, ferner umfassend:
eine Temperatursteuerung (268) zum Steuern einer Temperatur der Fluidprobe (120) in der Leitung (108).

**10.** Partikelüberwachungssystem (300) nach Anspruch 6, wobei die Flusssteuerung (255) eine Rate der Fluidprobe (120) durch die Leitung (108) derart steuert, dass die Verweilzeit des Partikelmaterials (125) in der Leitung (108) über einem Schwellenwert liegt.

**11.** Partikelüberwachungssystem (300) nach Anspruch 6, wobei die Flusssteuerung (255) eine Flussrate der Flüssigkeitsprobe (120) durch die Leitung (108) steuert, um zu bestimmen, welcher Teil der verschiedenen Größen von Partikelmaterial (125) in der Fluidprobe (120) die Gravitationskräfte überwinden und die Ausgangsöffnung (110) der Leitung (108) passieren.

**Revendications**

**1.** Procédé de surveillance de la présence de matière particulaire (125) dans un échantillon de fluide (120), ledit procédé comprenant :

la réception de l'échantillon de fluide (120) introduit dans une conduite (108) par un orifice d'entrée (105), l'échantillon de fluide (120) contenant différentes tailles de la matière particulaire (125), la conduite (108) s'étendant verticalement de l'orifice d'entrée (105) à l'orifice de sortie (110), lequel est disposé à un niveau verticalement plus élevé de la conduite (108) que l'orifice d'entrée (105) ;
la régulation de l'écoulement de l'échantillon de fluide (120) à travers la conduite (108), de l'orifice d'entrée (105) à l'orifice de sortie (110), dans le but de faire vieillir la matière particulaire (125) présente dans la conduite, la première partie de la matière particulaire (125) présente dans la conduite (108) voyant son diamètre aérodynamique équivalent réduit en raison du vieillissement ;
l'émission de la première partie de la matière particulaire (125) présente dans l'échantillon de fluide (120) à partir de l'orifice de sortie (110) de la conduite (108) ; et
la surveillance de la présence de la première partie de la matière particulaire (125) émise à partir de l'orifice de sortie (110) de la conduite (108) ;
ledit procédé comprenant en outre :

l'utilisation de forces gravitationnelles pour séparer, dans la conduite (108), les particules dont le diamètre aérodynamique équivalent est supérieur dans l'échantillon de fluide (120) des particules dont le diamètre aérodynamique équivalent est inférieur dans l'échantillon de fluide (120) ;
la simulation du vieillissement de la matière particulaire (125) en contrôlant les paramètres ambiants de l'échantillon de fluide (120) se trouvant dans la conduite (108), les paramètres ambiants comprenant la température de l'échantillon de fluide (120) ou l'humidité relative de l'échantillon de fluide (120), température/humidité à laquelle le diamètre aérodynamique équivalent de la seconde partie de la matière particulaire (125) reçue en provenance de l'orifice d'entrée (105) augmente pendant le vieillissement en fonction des paramètres ambiants contrôlés, la seconde partie des particules se déposant dans un bassin (155) de la conduite (108) en dessous de l'orifice d'entrée (105) en raison des forces gravitationnelles plutôt que d'être émise à partir de l'orifice de sortie (110) avec des particules de la matière particulaire dont le diamètre aérodynamique équivalent n'est pas suffisamment grand pour permettre leur dépôt dans le bassin (155) en raison des forces gravitationnelles.

**2.** Procédé selon la revendication 1, **caractérisé en ce que** les forces gravitationnelles sont sensiblement opposées à un écoulement directionnel (135) de l'échantillon de fluide (120) passant à travers la conduite (108), de l'orifice d'entrée (105) à l'orifice de sortie (110) ; et
**caractérisé en ce que** l'émission de la première partie de la matière particulaire (125) comprend l'émission de la première partie de la matière particulaire (125) dans une direction verticale à travers l'orifice de sortie (110) vers un système de surveillance de masse (240), la direction verticale étant sensiblement similaire à la direction de l'écoulement vertical de l'échantillon de fluide (120) à travers la conduite (108).

**3.** Procédé selon la revendication 1, comprenant en outre :
la régulation de la vitesse d'écoulement de l'échantillon de fluide (120) à travers la conduite (108), de l'orifice d'entrée (105) à l'orifice de sortie (110), dans le but :

i) de séparer les particules dont le diamètre aérodynamique équivalent est supérieur des particules dont le diamètre aérodynamique équivalent est inférieur,

ii) d'émettre, à partir de l'orifice de sortie (110), les particules dont le diamètre aérodynamique équivalent est inférieur, et

iii) de permettre le dépôt, dans le bassin (155), des particules dont le diamètre aérodynamique équivalent est supérieur, le bassin (155) étant disposé à un niveau verticalement moins élevé de l'orifice d'entrée (105) de la conduite (108).

4. Procédé selon la revendication 1, **caractérisé en ce que** la régulation de l'écoulement de l'échantillon de fluide (120) à travers la conduite (108) dans le but de faire vieillir la matière particulaire (125) comprend :

la régulation de la vitesse d'écoulement de l'échantillon de fluide (120) à travers la conduite (108) de sorte que le temps de séjour de la matière particulaire (125) présente dans la conduite (108) soit supérieur à la valeur seuil.

5. Procédé selon la revendication 1, comprenant en outre :

la régulation de la vitesse d'écoulement de l'échantillon de fluide (120) à travers la conduite (108) afin de surveiller, parmi les différentes tailles présentes dans l'échantillon de fluide (120), la taille de la matière particulaire (125) qui traverse l'orifice de sortie (110) de la conduite (108).

6. Système de surveillance de particules (300) pour la surveillance de la présence de matière particulaire (125) dans un échantillon de fluide (120), ledit système comprenant :

une conduite (108) configurée pour recevoir l'échantillon de fluide (120) par un orifice d'entrée (105), l'échantillon de fluide (120) contenant différentes tailles de la matière particulaire (125) ;

un régulateur d'écoulement (255) pour réguler la vitesse d'écoulement de l'échantillon de fluide (120) à travers la conduite (108) afin de faire vieillir la matière particulaire (125) présente dans la conduite (108), le vieillissement de la matière particulaire réduisant le diamètre aérodynamique équivalent de la première partie de la matière particulaire (125) présente dans la conduite (108) ;

un bassin (155) disposé à un niveau verticalement moins élevé de l'orifice d'entrée (105) de la conduite (108) ;

un orifice de sortie (110) disposé à un niveau verticalement plus élevé de la conduite (108) que l'orifice d'entrée (105), l'orifice de sortie (110) configuré pour émettre la première partie de la matière particulaire (125) présente dans l'échantillon de fluide (120) ; et

un écran (240) permettant d'analyser la présence de la première partie de la matière particulaire (125) émise à partir de l'orifice de sortie (110) de la conduite (108) ;

**caractérisé en ce que** des forces gravitationnelles séparent les particules dont le diamètre aérodynamique équivalent est supérieur des particules dont le diamètre aérodynamique équivalent est inférieur dans l'échantillon de fluide (120) ; et

**caractérisé en ce que** le régulateur (255) comporte des moyens de régulation (268, 315) permettant de contrôler les paramètres ambiants de l'échantillon de fluide (120) se trouvant dans la conduite (108), **caractérisé en ce que** les paramètres ambiants comprennent la température de l'échantillon de fluide (120) ou l'humidité relative de l'échantillon de fluide (120) permettant de stimuler le vieillissement de la matière particulaire (125), température/humidité à laquelle le diamètre aérodynamique équivalent de la seconde partie de la matière particulaire (125) reçue en provenance de l'orifice d'entrée (105) augmente en fonction des paramètres ambiants contrôlés et se dépose dans le bassin (155) en raison des forces gravitationnelles.

7. Système de surveillance de particules (300) selon la revendication 6, **caractérisé en ce que** les forces gravitationnelles sont sensiblement opposées à un écoulement directionnel (135) de l'échantillon de fluide (120) passant à travers la conduite (108), de l'orifice d'entrée (105) à l'orifice de sortie (110).

8. Système de surveillance de particules (300) selon la revendication 6, **caractérisé en ce que** le régulateur d'écoulement (255) régule la vitesse d'écoulement de l'échantillon de fluide (120) de l'orifice d'entrée (105) à l'orifice de sortie (110) à travers la conduite (108) afin :

i) de séparer, dans la conduite (108), les particules dont le diamètre aérodynamique équivalent est supérieur des particules dont le diamètre aérodynamique équivalent est inférieur,

ii) d'émettre les particules dont le diamètre aérodynamique équivalent est inférieur, de la conduite (108) jusqu'à l'orifice de sortie (110), et

iii) de permettre le dépôt, dans le bassin (155), des particules dont le diamètre aérodynamique équivalent est supérieur, le bassin étant disposé à un niveau verticalement moins élevé de l'orifice d'entrée (105).

9. Système de surveillance de particules (300) selon la revendication 6, comprenant en outre :
un régulateur de température (268) pour réguler la température de l'échantillon de fluide (120) présent dans la conduite (108).

10. Système de surveillance de particules (300) selon la revendication 6, **caractérisé en ce que** le régulateur d'écoulement (255) régule la vitesse d'écoulement de l'échantillon de fluide (120) à travers la conduite (108) de sorte que le temps de séjour de la matière particulaire (125) présente dans la conduite (108) soit supérieur à la valeur seuil.

11. Système de surveillance de particules (300) selon la revendication 6, **caractérisé en ce que** le régulateur d'écoulement (255) régule la vitesse d'écoulement de l'échantillon de fluide (120) à travers la conduite (108) pour surveiller laquelle des parties parmi les différentes tailles de la matière particulaire (125) présente dans l'échantillon de fluide (120) surmonte les forces gravitationnelles et traverse l'orifice de sortie (110) de la conduite (108).

FIG. 1

FIG. 2

Setting Velocity (m/s) versus Aerodynamic Equivalent Diameter @ 50 deg C

FIG. 3

FIG. 4

EP 2 569 069 B1

```
600
```

| | |
|---|---|
| RECEIVE A FLUID SAMPLE INPUTTED TO A CONDUIT THROUGH AN INPUT PORT, THE FLUID SAMPLE INCLUDING DIFFERENT SIZES OF PARTICULATE MATTER | 610 |
| CONTROL A FLOW OF THE FLUID SAMPLE THROUGH THE CONDUIT TO AGE THE PARTICULATE MATTER IN THE CONDUIT | 620 |
| OUTPUT A PORTION OF THE PARTICULATE MATTER FROM AN OUTPUT PORT OF THE CONDUIT, THE OUTPUT PORT DISPOSED AT A VERTICALLY HIGHER LEVEL OF THE CONDUIT THAN THE INPUT PORT | 630 |
| MONITOR A PRESENCE OF PARTICULATE MATTER OUTPUTTED FROM THE OUTPUT PORT OF THE CONDUIT | 640 |

FIG. 5

EP 2 569 069 B1

700 ⌐

RECEIVE A FLUID SAMPLE INPUTTED TO A CONDUIT THROUGH AN INPUT PORT, THE FLUID SAMPLE INCLUDING DIFFERENT SIZES OF PARTICULATE MATTER ⟍710

CONTROL A FLOW OF THE FLUID SAMPLE THROUGH THE CONDUIT TO AGE THE PARTICULATE MATTER SUCH THAT THE RESIDENCE TIME OF THE PARTICULATE MATTER IN THE CONDUIT IS ABOVE A RESIDENCE TIME THRESHOLD VALUE ⟍720

RELY ON GRAVITATIONAL FORCES TO SEPARATE, IN THE CONDUIT, HEAVIER PARTICLES IN THE PARTICULATE MATTER FROM LIGHTER PARTICLES IN THE FLUID SAMPLE, THE GRAVITATIONAL FORCES BEING SUBSTANTIALLY OPPOSITE TO A DIRECTIONAL FLOW OF THE FLUID SAMPLE PASSING THROUGH THE CONDUIT FORM THE INPUT PORT TO THE OUTPUT PORT ⟍730

CONTROL A FLOW RATE OF THE FLUID SAMPLE FROM THE INPUT PORT TO THE OUTPUT PORT THROUGH THE CONDUIT TO OUTPUT THE LIGHTER PARTICLES FROM THE OUTPUT PORT AND SETTLE THE HEAVIER PARTICLES IN A BASIN, THE BASIN DISPOSED AT A VERTICALLY LOWER LEVEL THAN A LEVEL OF THE INPUT PORT OF THE CONDUIT ⟍740

OUTPUT A PORTION OF THE PARTICULATE MATTER FROM AN OUTPUT PORT OF THE CONDUIT, THE OUTPUT PORT DISPOSED AT A VERTICALLY HIGHER LEVEL OF THE CONDUIT THAN THE INPUT PORT ⟍750

UTILIZE A TAPERED CONDUIT IN THE OUTPUT PORT TO FOCUS THE FLUID SAMPLE OUTPUTTED FROM THE CONDUIT ⟍760

MONITOR A PRESENCE OF PARTICULATE MATTER OUTPUTTED FROM THE OUTPUT PORT OF THE CONDUIT ⟍770

MEASURE A PARTICLE SIZE DISTRIBUTION OF THE PARTICULATE MATTER OUTPUTTED FROM THE OUTPUT PORT THROUGH THE TAPERED CONDUIT ⟍780

FIG. 6

FIG. 7

FIG. 8

1320

1320

1310

FIG. 9

FIG. 10

1510

1460

TOP VIEW

1405

1520

1430

1590

Interior Air Curtain Air Delivery

Exterior Purge Air Delivery

FIG. 11

1610

1460

1405

1520

1430

1590

External Purge Air Delivery

Interior Air Curtain Air Delivery

FIG. 12

FIG. 13

FIG. 14

**EP 2 569 069 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6283301 B
- US 6883667 B

- GB 2104414 A
- WO 2007044496 A2

### Non-patent literature cited in the description

- **G.R. CASS.** SOURCE CONTRIBUTIONS TO ATMOSPHERIC CARBON PARTICLE CONCENTRATIONS. CALIFORNIA INSTITUTE OF TECHNOLOGY, 1992

- Air classification of solid particles: a review. **SHAPIRO et al.** Chemical Engineering & Processing. Elsivier Sequoia, 01 February 2005, vol. 44, 279-285